# EUROPÄISCHE PATENTSCHRIFT

(11) **EP 3 778 521 B1**
(45) Veröffentlichungstag und Bekanntmachung des Hinweises auf die Patenterteilung: **25.11.2026**
(21) Anmeldenummer: 20187910.3
(22) Anmeldetag: 07.03.2012
(51) Int. Cl.: C04B 24/12, C04B 26/02, C04B 40/00

(54) **BESCHLEUNIGERMISCHUNG FÜR PEROXIDHÄRTER UND DIESE ENTHALTENDES ZWEIKOMPONENTEN-MÖRTELSYSTEM**
ACCELERATOR MIXTURE FOR PEROXIDE CURING AGENTS AND TWO-COMPONENT MORTAR SYSTEM CONTAINING THE SAME
MÉLANGE ACCÉLÉRATEUR POUR DURCISSEUR DE PEROXYDE ET SYSTÈME DE MORTIER À DEUX COMPOSANTS COMPORTANT CELUI-CI

(30) Priorität: 27.04.2011 DE 102011017619
(43) Veröffentlichungstag der Anmeldung: 17.02.2021
(62) Dokumentnummer(n) der früheren Anmeldung(en) nach Art. 76 EPÜ: 12158409.8 / 2 518 033
(73) Patentinhaber: Hilti Aktiengesellschaft, 9494 Schaan (LI)
(72) Erfinder: Bürgel, Thomas, 86899 Landsberg (DE)
(74) Vertreter: Hilti Aktiengesellschaft Corporate Intellectual Property

(56) Entgegenhaltungen:
- EP-A1- 0 650 942
- EP-A2- 1 935 860
- CN-A- 1 418 909
- DE-A1- 102006 030 044
- US-A- 4 666 978

## Beschreibung

Die vorliegende Erfindung betrifft eine Beschleunigermischung für organische Peroxidhärter, insbesondere eine Beschleunigermischung für eine mit Diacylperoxiden härtbare Harzmischung, ein die Beschleunigermischung enthaltende Harzmischung und deren Verwendung in Zweikomponenten-Mörtelsystemen für die chemische Befestigung. Ferner betrifft die Erfindung die Verwendung des Zweikomponenten-Mörtelsystems zur chemischen Befestigung, insbesondere zur chemischen Befestigung von Verankerungsmitteln in Bohrlöchern.

Chemische Mörtelmassen auf Basis von radikalisch polymerisierbaren Verbindungen sind seit langem bekannt. Diese Mörtelmassen werden in ZweikomponentenSystemen, die sich in der Regel aus einem Reaktionsharzmörtel (A Komponente) und einem Härter (B Komponente) zusammensetzen, verwendet. Aus dem Stand der Technik sind Zweikomponentensysteme mit einem organischen Bindemittel auf Basis von radikalisch polymerisierbaren Verbindungen bekannt, die ein Diacylperoxid, insbesondere Dibenzoylperoxid, als Härtungsmittel enthalten. Diese Systeme enthalten eine Harzmischung auf Basis radikalisch polymerisierbarer Verbindungen, eine zur Beschleunigung der Polymerisationsreaktion fähige Verbindung, die dazu dient, die Bildung des Radikalstarters zu beschleunigen, und eine zur Inhibierung der Polymerisationsreaktion fähige Verbindung, die dazu dient, die Polymerisationsreaktion zu verzögern. Damit ist es möglich, unter anderem die Gelzeit der Mörtelmasse entsprechend den Anforderungen an die Mörtelmasse gezielt einzustellen.

Als die zur Beschleunigung der Polymerisationsreaktion fähige Verbindung, häufig als Beschleuniger bezeichnet, werden dabei vielfach aromatische Amine, insbesondere substituierte Aniline und Toluidine verwendet.

Die mit substituierten Anilinen beschleunigten Mörtelmassen weisen zwar nach deren Aushärtung befriedigende Lastwerte bei hohen Temperaturen (+40°C) auf, haben jedoch eine schlechte Aushärtung bei tiefen Temperaturen zur Folge. So wurde gefunden, dass mit N,N-Diethylanilin beschleunigte Mörtel nach der Aushärtung zwar gute Lastwerte bei +40°C aufweisen, aber gleichzeitig die Lastwerte der ausgehärteten Massen bei Tieftemperaturanwendungen (-10°C) sinken.

Dementsprechend wurde vorgeschlagen, die Aniline durch N-substituierte p-Toluidine zu ersetzten, die wesentlich aktiver, insbesondere bei tiefen Temperaturen, und robuster sind, so dass heute in der Regel N-substituierte p-Toluidine, wie N,N-Bis(2-hydroxypropyl)-p-toluidin, als Beschleuniger für mit organischen Peroxiden gehärtete chemische Mörtel eingesetzt wird.

Bei chemischen Mörteln auf Basis von Methacrylaten beispielsweise werden heute üblicherweise Gelzeiten von 5 bis 6 Minuten eingestellt. Soll die Gelzeit auf etwa 8 bis 10 Minuten verlängert werden, muss das System stärker inhibiert werden. Dies ist vor allem bei der Verarbeitbarkeit der Mörtelmassen bei hohen Temperaturen und für die Anwendung bei nachträglichen Bewehrungsanschlüssen von besonderem Interesse. Allerdings fällt bei zu starker Inhibierung der Polymerisationsreaktion die Leistungsfähigkeit der ausgehärteten Massen, gerade bei hohen Umgebungstemperaturen stark ab, d.h. die Lastwerte sinken.

Anhand der Beobachtungen des Erfinders war zu erwarten, dass wenn man die aus dem Stand der Technik bekannten Beschleuniger auf Basis von aromatischen Aminen, insbesondere die auf Basis von Toluidinen und Anilinen, für die unterschiedlichen Anwendungstemperaturen kombiniert, Mörtelmassen erhalten werden, welche über einen breiten, insbesondere in den Temperaturgrenzbereichen von -40°C und +80°C weder eine zufriedenstellende Härtung sicherstellen noch gleichzeitig zufriedenstellende Lastwerte der ausgehärteten Massen liefern. Dies vor dem Hintergrund, dass m-Toluidine oder Aniline zwar die Hochtemperatureigenschaften positiv aber die Tieftemperatureigenschaften negativ beeinflussen, die p-Toluidin entsprechend die Tieftemperatureigenschaften positiv aber die Hochtemperatureigenschaften negativ beeinflussen.

US 4,666,978 offenbart Mischungen von N,N-Dimethyl-p-Toluidine (DMPT) und N,N-Dimethyl-m-Toluidine (DMMT) als Beschleuniger für Polyesterharze sowie deren Verwendung zur Verankerung von Befestigungsmitteln.

Es besteht also Bedarf an einem System, mit dem es möglich wird, die Gelzeit zu verlängern, ohne die Eigenschaften des Systems, wie die Aushärtung insbesondere bei tiefen Temperaturen und die Lastwerte der ausgehärteten Masse insbesondere bei hohen Temperaturen, negativ zu beeinflussen, und somit die Eigenschaften über den gesamten Temperaturbereich von -10°C bis +40°C aufrechtzuerhalten.

Aufgabe der vorliegenden Erfindung ist daher, die Bereitstellung eines Beschleunigers für Härter auf Basis organischer Peroxide als Härtungsmittel, insbesondere auf Basis von Diacylperoxiden zur Verwendung in Zweikomponenten-Mörtelsystemen der eine verlängerte Gelzeit ermöglicht, ohne jedoch die negativen Auswirkungen der aus dem Stand der Technik bekannten Beschleuniger, wie mäßige Aushärtung bei tiefen Temperaturen und geringe Lastwerte der ausgehärteten Masse bei hohen Temperaturen, zu zeigen. Durch die Erfindung soll ferner eine mit organischen Peroxiden, insbesondere Diacylperoxiden härtbare Harzmischung mit verlängerter Gelzeit bereitgestellt werden, die gute Aushärteeigenschaften bei gleichzeitig hohen Lastwerten über einen hohen Temperaturbereich (-10°C bis +40°C) aufweist.

Es hat sich nun überraschenderweise gezeigt, dass die der vorliegenden Erfindung zugrunde liegende Aufgabe dadurch gelöst werden kann, dass man in einem Zweikomponenten-Mörtelsystem der eingangs angegebenen Art ein Gemisch aus N,N-Bis-(2-hydroxyethyl)-p-toluidin, N,N-Bis-(2-hydroxypropyl)-p-toluidin oder jeweils einem ethoxylierten oder propoxylierten Derivat davon (Hauptbeschleuniger) und einem bis-N-substituierten m-Toluidin (Co-Beschleuniger), wie in Anspruch 1 definiert, als Beschleuniger einsetzt.

Es wurde überraschend herausgefunden, dass die mit Verlängerung der Gelzeit abfallenden Lastwerte durch Zumischung eines Co-Beschleunigers, der einzeln nur sehr mäßige Lastwerte zulässt, signifikant verbessert werden.

Im Sinne der Erfindung bedeuten:
*"Harzmischung"* eine Mischung aus dem Reaktionsgemisch der Harzherstellung (Grundharz), enthaltend die radikalisch polymerisierbare Verbindung, einen Katalysator für die Herstellung der Verbindung und Reaktivverdünner, und Beschleunigern sowie Stabilisatoren und ggf. weiteren Reaktivverdünnern; dieser Begriff wird gleichbedeutend mit dem Begriff *"organisches Bindemittel"* verwendet;
*"Reaktionsharzmörtel"* eine Mischung aus Harzmischung und anorganischen Zuschlagstoffen; hierfür wird gleichbedeutend der Begriff "Harz- oder A Komponente" verwendet;
*"Härtungsmittel"* Stoffe, welche die Polymerisation (das Härten) des Grundharzes bewirken;
*"Härter"* eine Mischung aus Härtungsmittel, Phlegmatisierungsmittel, ggf. inerten Lösungsmitteln und anorganischen Zuschlagstoffen; hierfür wird gleichbedeutend der Begriff "Härter- oder B Komponente" verwendet;
*"Beschleuniger"* Substanzen, welche die Polymerisation (Härtung) beschleunigen;
*"Reaktivverdünner"* flüssige oder niedrigviskose radikalisch polymerisierbare Verbindungen, welche die Harzmischung verdünnen und dadurch die zu deren Applikation notwendige Viskosität verleihen, zur Reaktion mit dem Grundharz befähigte funktionelle Gruppen enthalten und bei der Polymerisation (Härtung) zum überwiegenden Teil Bestandteil des gehärteten Masse (Mörtel) werden.
*"Mörtelmasse"* bezeichnet die Formulierung, die durch Mischen des Reaktionsharzmörtels mit dem Härter, der das Härtungsmittel enthält, erhalten wird als solches direkt zur chemischen Befestigung verwendet werden kann; *"Zweikomponenten-Mörtelsystem"* wird ein Systembezeichnet, dass eine A Komponente, den Reaktionsharzmörtel, und eine B Komponente, den Härter, umfasst, wobei die beiden Komponenten reaktionsinhibierend getrennt gelagert sind, so dass eine Härtung des Reaktionsharzmörtels erst nach deren Mischen erfolgt.

Gegenstand der Erfindung ist daher eine Beschleunigermischung gemäss Anspruch 1. Weiterer Gegenstände der Erfindung ist eine die erfindungsgemäße Beschleunigermischung enthaltende Harzmischung gemäß Anspruch 3, ein diese enthaltender Reaktionsharzmörtel gemäß Anspruch 5, ein Zweikomponenten-Mörtelsystem gemäß Anspruch 8 sowie dessen Verwendung zur chemischen Befestigung gemäß Anspruch 13. Die entsprechenden Unteransprüche betreffen bevorzugte Ausführungsformen dieser Erfindungsgegenstände.

Mit der erfindungsgemäßen Beschleunigermischung ist es möglich, die Gelzeit von Mörtelmassen, auf Basis von mit organischen Peroxiden, insbesondere Diacylperoxiden härtbaren Verbindungen zu verlängern, ohne deren Eigenschaften negativ zu beeinflussen. In den erfindungsgemäßen Mörtelmassen gewährleistet die Beschleunigermischung ein besseres Aushärteverhalten, vor allem eine bessere Tieftemperaturhärtung (-10°C), bei gleichzeitig hohen Lastwerten, vor allem bei höheren Temperaturen (+40°C), als bei den bisher bekannten Systemen.

Erfindungsgemäß enthält die Beschleunigermischung einen Hauptbeschleuniger (I), wie in Anspruch 1 definiert, und einen Co-Beschleuniger (II), wobei der Co-Beschleuniger (II) eine Verbindung der Formel (II) ist, 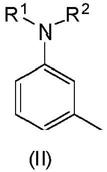 in der R¹ und R² unabhängig voneinander eine C₁- oder C₂-Alkylgruppe, eine C₁-Hydroxyalkylgruppe oder eine einfach oder mehrfach ethoxylierte oder propoxylierte C₁-C₃-Hydroxyalkylgruppe ist.

Erfindungsgemäß ist der Hauptbeschleuniger (I) aus der Gruppe, bestehend aus N,N-Bis-(2-hydroxyethyl)-p-toluidin, N,N-Bis-(2-hydroxypropyl)-p-toluidin und jeweils ein ethoxyliertes oder propoxyliertes Derivat davon, ausgewählt. Besonders bevorzugt ist der Hauptbeschleuniger (I) N,N-Bis(2-hydroxypropyl)-p-toluidin.

Erfindungsgemäß wird der Hauptbeschleuniger und der Co-Beschleuniger in einem molaren Verhältnis (I):(II) von 1:1 bis 5:1, bevorzugt 3:2 bis 4:1 und besonders bevorzugt 3:1 eingesetzt. Bei einem Verhältnis von größer 5:1 wird kein Effekt des Co-Beschleunigers mehr beobachtet, so dass die Aushärteeigenschaft bei tiefen Temperaturen und die Lastwerte bei hohen Temperaturen (+40°C) erheblich von dem Hauptbeschleuniger bestimmt werden. Es wird dann zwar eine gute Tieftemperaturhärtung beobachtet, jedoch leiden die Lastwerte der ausgehärteten Masse, so dass die Lastwerte bei hohen Temperaturen (+40°C) abnehmen.

Ein weiterer Gegenstand der Erfindung ist eine Harzmischung umfassend mindestens eine radikalisch polymerisierbaren Verbindung, einen Beschleuniger für das Härtungsmittel und gegebenenfalls mindestens einen Inhibitor und mindestens einen Reaktivverdünner, die dadurch gekennzeichnet ist, dass der Beschleuniger eine Beschleunigermischung ist, die einen Hauptbeschleuniger (I), wie in Anspruch 1 definiert, und einen Co-Beschleuniger (II) enthält, wobei Co-Beschleuniger (II) eine Verbindung der Formel (II) ist, 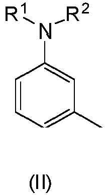 in der R¹ und R² unabhängig voneinander eine C₁- oder C₂-Alkylgruppe, eine C₁₋Hydroxyalkylgruppe oder eine einfach oder mehrfach ethoxylierte oder propoxylierte C₁-C₃-Hydroxyalkylgruppe ist.

Bezüglich der genaueren Beschreibung der Beschleunigermischung wird auf die obigen Ausführungen verwiesen.

Erfindungsgemäß ist die Beschleunigermischung in einer Menge von 1,0 bis 3,0 Gew.-%, bevorzugt von 1,3 bis 2,6 Gew.-% und am stärksten bevorzugt von 1,7 bis 2,3 Gew.-%, bezogen auf die Harzmischung, enthalten.

Neben der oben beschriebenen Beschleunigermischung kann die Harzmischung noch weitere Beschleuniger enthalten, wie Salze von Kobalt (z.B. Kobaltoctoat, Kobaltnaphthenat), Mangan, Zinn, Vanadium (z.B. Vanadium(IV)-acetylacetonat, Vanadium(V)-acetylacetonat) oder Cer.

Als radikalisch polymerisierbare Verbindungen sind erfindungsgemäß ethylenisch ungesättigte Verbindungen, cyclische Monomere, Verbindungen mit Kohlenstoff-Kohlenstoff-Dreifachbindungen und Thiol-Yne/Ene-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättiger Polyester, die in der erfindungsgemäßen Harzmischung verwendet werden können, werden in folgende Kategorien eingeteilt, wie sie durch M. Malik et al. in J. M. S. - Rev. Macromol. Chem. Phys., C40(2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diese Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion eines Diacids, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigten Gruppen aufweisen, werden zum Beispiel durch Umsetzung von Epoxid-Oligomeren oder -Polymeren (z.B. Bisphenol A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomeren oder -Polymeren mit Methacrylsäure oder Methacrylamid, bevorzugt mit Methacrylsäure, erhalten werden. Beispiele solcher Verbindungen sind aus den Anmeldungen US 3 297 745 A, US 3 772 404 A, US 4 618 658 A, GB 2 217 722 A1, DE 37 44 390 A1 und DE 41 31 457 A1 bekannt.

In diesem Zusammenhang wird auf die Anmeldung US 2011071234 AA verwiesen.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Als Vinylesterharz besonders geeignet sind ethoxyliertes Bisphenol-A-di(meth)acrylat mit einem Ethoxylierungsgrad von 2 bis 10, vorzugsweise von 2 bis 4, difunktionelle, trifunktionelle oder höherfunktionelle Urethan(meth)acrylat-Oligomere oder Mischungen dieser härtbaren Bestandteile.

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind, wie sie beispielsweise in der WO 2010/108939 A1 (Itaconsäureester) beschrieben sind.

Die radikalisch polymerisierbare Verbindung ist in einer Menge von 10 bis 30 Gew.-%, vorzugsweise 10 bis 20 Gew.-%, bezogen auf die Harzmischung, enthalten.

In einer bevorzugten Ausführungsform der Erfindung enthält die Harzmischung ferner weitere niederviskose, radikalisch polymerisierbare Verbindungen als Reaktivverdünner, um die Viskosität der als Harz fungierenden radikalisch polymerisierbaren Verbindung anzupassen, falls erforderlich. Die Reaktivverdünner können in einer Menge von 20 bis 70 Gew.-%, vorzugsweise 30 bis 70 Gew.-%, besonders bevorzugt 50 bis 70 Gew.-% bezogen auf die Harzmischung, zugegeben werden.

Geeignete Reaktivverdünner sind in EP 1 935 860 A1 und DE 195 31 649 A1 beschrieben. Vorzugsweise enthält die Harzkomponente (A) als Comonomer (c) einen (Meth)acrylsäureester, wobei besonders bevorzugt (Meth)acrylsäureester aus der Gruppe ausgewählt werden, bestehend aus Hydroxypropyl(meth)acrylat, Butandiol-1,2-di(meth)acrylat, Trimethylolpropantri(meth)acrylat, 2-Ethylhexyl(meth)acrylat, Phenylethyl-(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, 1,4-Butandioldi(meth)acrylat, Acetoacetoxyethyl(meth)acrylat, 1,2-Ethandioldi(meth)acrylat, Isobornyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.²³-decan, 3-(Meth)-yclopentadienyl(meth)acrylat, Isobornyl(meth)acrylat und Decalyl-2-(meth)acrylat.

Grundsätzlich können auch andere übliche radikalisch polymerisierbaren Verbindungen, allein oder im Gemisch mit den (Meth)acrylsäureestern, eingesetzt werden, z. B. Styrol, α-Methylstyrol, alkylierte Styrole, wie tert.-Butylstyrol, Divinylbenzol und Allylverbindungen.

Die zur Bezeichnung der radikalisch polymerisierbaren Verbindungen verwendete Nomenklatur "(Meth)acryl.../...(methy)acryl..." bedeutet, dass mit dieser Bezeichnung sowohl die "Methacryl.../... methacryl... "- als auch die "Acryl.../...acryl..."-Verbindungen umfasst sein sollen.

In einer bevorzugten Ausführungsform der Erfindung enthält die Harzmischung ferner noch einen Inhibitor zur Einstellung der Gelzeit. Als Inhibitoren sind erfindungsgemäß die für radikalisch polymerisierbare Verbindungen üblicherweise verwendeten Inhibitoren geeignet, wie sie dem Fachmann bekannt sind. Bevorzugt sind die Inhibitoren unter phenolischen Verbindungen und nicht-phenolischen Verbindungen, wie stabilen Radikalen und/oder Phenothiazinen, ausgewählt.

Als phenolische Inhibitoren, die oft Bestandteil von kommerziellen radikalisch härtenden Reaktionsharzen sind, kommen Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, in Frage.

Als nicht-phenolische oder anaerobe, d.h. im Gegensatz zu den phenolischen Inhibitoren auch ohne Sauerstoff wirksame Inhibitoren, kommen vorzugsweise Phenothiazine, wie Phenothiazin und/oder Derivate oder Kombinationen davon, oder stabile organische Radikale, wie Galvinoxyl- und N-Oxylradikale in Betracht.

Als N-Oxylradikale können beispielsweise solche verwendet werden, wie sie in der DE199 56 509 beschrieben sind. Geeignete stabile N-Oxylradikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-oxyl Verbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Die Inhibitoren können, abhängig von den gewünschten Eigenschaften der Harzzusammensetzungen, entweder allein oder als Kombination von zweien oder mehreren davon verwendet werden. Die Kombination der phenolischen und der nicht-phenolischen Inhibitoren ermöglicht dabei einen synergistischen Effekt, wie auch die Einstellung einer im Wesentlichen driftfreien Einstellung der Gelierzeit der Reaktionsharzformulierung zeigt.

Der Inhibitor ist vorzugsweise in einer Menge von 0,01 bis 0,5 Gew.-%, vorzugsweise 0,03 bis 0,35 Gew.- %, bezogen auf die Harzmischung enthalten.

Ein weiterer Gegenstand der Erfindung ist ein Reaktionsharzmörtel, umfassend die oben beschriebene Harzmischung und weitere anorganische Zuschlagstoffe.

Als anorganische Zuschlagstoffe, die in einem erfindungsgemäßen Reaktionsharzmörtel und/oder dem Härter vorhanden sein können, sind insbesondere Thixotropiermittel, Verdickungsmittel, Füllstoffe und/oder weitere Zusätze.

Geeignete Thixotropiermittel und Verdickungsmittel sind gegebenenfalls organisch nachbehandelte pyrogene Kieselsäure, Silikate, Laponit, Bentonite, Alkyl- und Methylcellulosen, Rhizinusölderivate, derivatisierte Cellulose oder dergleichen.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Russ, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl, oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 0,001 bis 10 mm. Bevorzugt und deutlicher verstärkend wirken sich jedoch die globulären, inerten Stoffe (Kugelform) aus.

Weitere denkbare Zusätze sind ferner Weichmacher, wie Phthalsäure- oder Sebacinsäureester, Stabilisatoren, Antistatikmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich.

Zweckmäßig macht die Harzmischung 30 bis 50 Gew.-%, bevorzugt etwa 40 Gew.-%, und die weiteren Zuschlagstoffe 50 bis 70 Gew.-% des Reaktionsharzmörtels aus.

Ein weiterer Gegenstand der Erfindung ist ein Zweikomponenten-Mörtelsystem umfassend als A Komponente den eben beschriebnen Reaktionsharzmörtel und als B Komponente einen Härter. Räumlich und damit reaktionsinhibierend getrennt vom Reaktionsharzmörtel, also der Komponente, welche den härtbaren Bestandteil enthält, enthält das Zweikomponenten-Mörtelsystem als Härtungsmittel ein organisches Peroxid, wie Methylethylketonperoxid, tert.-Butylperbenzoat, Cyclohexanonperoxid, Cumolhydroperoxid und/oder tert-Butylperoxy-2-ethylhexanoat, oder ein Diacylperoxid, bevorzugt Benzoylperoxid oder Lauroylperoxid, wobei ein Diacylperoxid bevorzugt und Benzoylperoxid besonders bevorzugt ist. Dabei ist das Härtungsmittel in einer Konzentration von 0,5 bis 3 Gew.-%, vorzugsweise 1,5 bis 2,5 Gew.-%, bezogen auf die Gesamtmenge von A und B Komponente (die Mörtelmasse), vorhanden.

Die B Komponente (Härter) des Zweikomponenten-Mörtelsystems kann darüber hinaus übliche anorganische Zuschlagstoffe enthalten.

Die B Komponente (Härter) kann auch Wasser und/oder organische Verdünnungsmittel (Lösungsmittel) in einer Menge bis zu 30 Gew.-% bezogen, auf die Mörtelmasse, beispielsweise von 1 bis 20 Gew.-%, enthalten, wie Phthalsäureester, höherwertige Alkohole und deren ethoxylierte oder propoxylierte bzw. funktionalisierte Derivate wie Ethylenglycol, Propylenglycol, Glycerin, Di-, Tri- usw. oder Polyethylenglycol, sowie beispielsweise Glycerin- oder PEG-Vinyl- oder Allylether, wobei diese in der B Komponente neben der Herstellung einer Paste oder Emulsion, d.h. der Einstellung der rheologischen Eigenschaften, auch als Phlegmatisierungsmittel dienen.

Das Peroxid liegt bevorzugt als wässrige Dispersion vor, wobei das Wasser als Phlegmatisierungsmittel dient.

Bei einer besonders bevorzugten Ausführungsform des Zweikomponenten-Mörtelsystems enthält die A Komponente neben dem Reaktionsharzmörtel zusätzlich noch eine hydraulisch abbindende oder polykondensierbare anorganische Verbindung und die B Komponente neben dem Härtungsmittel noch Wasser. Derartige Mörtelmassen sind ausführlich in DE 42 31 161 A1 beschrieben. Dabei enthält die A Komponente vorzugsweise als hydraulisch abbindende oder polykondensierbare anorganische Verbindung Zement, beispielsweise Portlandzement oder Aluminatzement, wobei eisenoxidfreie oder eisenoxidarme Zemente besonders bevorzugt sind. Als hydraulisch abbindende anorganische Verbindung kann auch Gips als solcher oder in Mischung mit dem Zement eingesetzt werden.

Das erfindungsgemäße Zweikomponenten-Mörtelsystem findet vor allem zur chemischen Befestigung von Verankerungselementen, wie Ankern, Bewehrungseisen, schrauben und der gleichen, in Bohrlöchern Verwendung, insbesondere in Bohrlöchern in verschiedenen mineralischen Untergründen, wie solche auf der Grundlage von Beton, Porenbeton, Ziegelwerk, Kalksandstein, Sandstein, Naturstein und dergleichen.

Das Zweikomponenten-Mörtelsystem umfasst die A Komponente und die B Komponente reaktionsinhibierend getrennt in unterschiedlichen Behältern, beispielsweise einer Mehrkammer-Vorrichtung, wie eine Mehrkammer-Patrone und/oder -Kartusche, aus welchen Behältern die beiden Komponenten durch Einwirkung mechanischer Presskräfte oder unter Einwirkung eines Gasdruckes ausgepresst und vermischt werden. Eine weitere Möglichkeit besteht darin, das Zweikomponenten-Mörtelsystem als Zweikomponenten-Kapseln zu konfektionieren, die in das Bohrloch eingeführt werden und durch schlagdrehendes Setzen des Befestigungselements zerstört werden unter gleichzeitiger Durchmischung der beiden Komponenten der Mörtelmasse. Vorzugsweise wendet man ein Patronensystem oder ein Injektionssystem an, bei dem die beiden Komponenten aus den getrennten Behältern ausgepresst und durch einen statischen Mischer geführt werden, in dem sie homogen vermischt und dann über eine Düse vorzugsweise direkt in das Bohrloch ausgetragen werden.

Der große Vorteil der Erfindung liegt darin, dass mit der beschriebenen Beschleunigermischung die Gelzeit einer Mörtelmasse auf Basis radikalisch polymerisierender Verbindungen, die mit Peroxiden gehärtet werden, auf etwa 8 bis 10 Minuten eingestellt werden kann, und die Mörtelmasse einen zufriedenstellende Tieftemperaturhärtung (-10°C) und die ausgehärtete Masse einen zufriedenstellenden Lastwert bei hohen Temperaturen (+40°C) zeigt.

Die folgenden Beispiele dienen der weiteren Erläuterung der Erfindung.

### AUSFÜHRUNGSBEISPIELE

Die Formulierungen der Vergleichsbeispiele 1 bis 3 und der Beispiele 1 und 2 basieren auf den nachfolgend angegebenen Grundzusammensetzungen. Die Zusammensetzung des Aminbeschleunigers ist aus Tabelle 2 zu entnehmen.

Zur Herstellung der A Komponente werden zunächst unter Erwärmen der Aminbeschleuniger in dem Methacrylatharz gelöst. Zu der Lösung wird anschließend der Inhibitor gegeben und gerührt, bis eine homogene Lösung erhalten wird. Anschließend werden unter Vakuum die pyrogene Kieselsäure und die anorganischen Füllstoffe mit einem Dissolver in der Harzlösung dispergiert, bis eine homogene Paste vorliegt. Die Mengen [Gew.-%] beziehen sich jeweils auf die A Komponente, soweit nichts anderes angegeben ist.

Als Härter für das Methacrylatharz wird eine Dispersion von Benzoylperoxid in Wasser vorgelegt und darin die Füllstoffe dispergiert und mit der pyrogenen Kieselsäure verdickt. Die Mengen [Gew.-%] beziehen sich jeweils auf die B Komponente, soweit nichts anderes angegeben ist.

### A Komponente

| **Bestandteil** | **Gew.-%** |
|---|---|
| Urethanmethacrylat-Präpolymer | 16,4 |
| Diethylenglykoldimethacrylat | 14,35 |
| Hydroxyethylmethacrylat | 10,25 |
| Aminbeschleuniger * | 4,1 [mmol] |
| Pyrogene Kieselsäure | 3 |
| Quarzsand 0-0,7 mm | 41 |
| Portlandzement | 15 |

| | |
|---|---|
| * siehe Tabelle 2 | |

### B Komponente

| **Bestandteil** | **Gew.-%** |
|---|---|
| Dibenzoylperoxid | 7 |
| Wasser | 25 |
| Pyrogene Kieselsäure | 2,5 |
| Quarzmehl | 64,5 |
| Schichtsilikat | 1 |

### Beispiel 1 (nicht erfindungsgemäß)

Auf Grundlage der in Tabelle 1 aufgelisteten Komponenten wurde eine Mörtelmasse hergestellt, wobei der A Komponente als Inhibitor 0,13 Gew.-% Brenzkatechin und als Aminbeschleuniger 0,60 Gew.-% Bis-(2-hydroxyethyl)-p-toluidin (3,08 mmol) und 0,25 Gew.-% Bis-(2-hydroxyethyl)-m-toluidin (1,03 mmol) zur Einstellung der Gelzeit zugegeben wurden. Das molare Mischungsverhältnis von Bis-(2-hydroxyethyl)-p-toluidin zu Bis-(2-hydroxyethyl)-m-toluidin betrug dementsprechend 3:1

### Beispiel 2 (nicht erfindungsgemäß)

Auf Grundlage der in Tabelle 1 aufgelisteten Komponenten wurde eine Mörtelmasse hergestellt, wobei der A Komponente als Inhibitor 0,11 Gew.-% Brenzkatechin und als Aminbeschleuniger 0,41 Gew.-% Bis-(2-hydroxyethyl)-p-toluidin (2,05 mmol) und 0,42 Gew.-% Bis-(2-hydroxyethyl)-m-toluidin (2,05 mmol) zur Einstellung der Gelzeit zugegeben wurden. Das molare Mischungsverhältnis von Bis-(2-hydroxyethyl)-p-toluidin zu Bis-(2-hydroxyethyl)-m-toluidin betrug dementsprechend 1:1

### Vergleichsbeispiel 1

Auf Grundlage der in Tabelle 1 aufgelisteten Komponenten wurde eine Mörtelmasse hergestellt, wobei der A Komponente als Inhibitor 0,15 Gew.-% Brenzkatechin und als Aminbeschleuniger 0,80 Gew.-% Bis-(2-hydroxyethyl)-p-toluidin zur Einstellung der Gelzeit zugegeben wurden.

### Vergleichsbeispiel 2

Auf Grundlage der in Tabelle 1 aufgelisteten Komponenten wurde eine Mörtelmasse hergestellt, wobei der A Komponente als Inhibitor 0,07 Gew.-% Brenzkatechin und als Aminbeschleuniger 0,62 Gew.-% Diethylanilin zur Einstellung der Gelzeit zugegeben wurden.

### Vergleichsbeispiel 3

Auf Grundlage der in Tabelle 1 aufgelisteten Komponenten wurde eine Mörtelmasse hergestellt, wobei der A Komponente als Inhibitor 0,06 Gew.-% Brenzkatechin und als Aminbeschleuniger 0,96 Gew.-% Bis-(2-hydroxyethyl)-m-toluidin zur Einstellung der Gelzeit zugegeben wurden.

### a) Bestimmung der Gelzeit

Die Bestimmung der Gelzeit der in dieser Weise erhaltenen Mischung aus den A- und B Komponenten erfolgt mit einer handelsüblichen Vorrichtung (GELNORM^{®}-Gel Timer) bei einer Temperatur von 25°C. Hierzu werden die A und die B Komponente im Volumenverhältnis 3:1 gemischt und unmittelbar nach dem Mischen im Silikonbad auf 25°C temperiert und die Temperatur der Probe gemessen. Die Probe selbst befindet sich dabei in einem Reagenzglas, das in einen im Silikonbad versenkten Luftmantel zur Temperierung gesetzt wird.

Die Wärmeentwicklung der Probe wird gegen die Zeit aufgetragen. Die Auswertung erfolgt gemäß DIN16945, Blatt 1 und DIN 16916. Die Gelzeit ist die Zeit, bei der ein Temperaturanstieg um 10K erreicht wird, hier von 25°C nach 35°C.

Die Ergebnisse der Gelzeitbestimmung sind in Tabelle 2 gezeigt.

Hieraus wird deutlich, dass die Gelzeit der mit den Beschleunigermischungen gemäß den Bespielen 1 und 2 eingestellten erfindungsgemäßen Zusammensetzungen bei Raumtemperatur im Bereich der mit den aus dem Stand der Technik bekannten Inhibitoren eingestellten Zusammensetzungen liegen.

### b) Bestimmung der Lastwerte

Zur Bestimmung der Lastwerte der ausgehärteten Masse verwendet man eine Ankergewindestange M12, die in ein Bohrloch in Beton mit einem Durchmesser von 14 mm und einer Bohrlochtiefe von 72 mm mit dem erfindungsgemässen Zweikomponenten-Reaktionsharz eingedübelt wird. Man ermittelt die mittlere Versagenslast durch zentrisches Ausziehen der Ankergewindestange mit enger Abstützung unter Verwendung hochfester Ankergewindestangen. Es werden jeweils 3 Ankergewindestangen eingedübelt und nach 24 Stunden Aushärtung ihre Lastwerte bestimmt. Die hierbei ermittelten Lastwerte sind als Mittelwert in der nachfolgenden Tabelle 2 ebenfalls aufgeführt.

Hieraus wird deutlich, dass der bei Vergleichsbeispiel 1 erhaltene niedrige Lastwert im Hochtemperaturbereich (+40°C) und die bei den Vergleichsbeispielen 2 und 3 erhaltenen niedrigen Lastwerte im Tieftemperaturbereich (-10°C) durch die erfindungsgemäßen Beschleunigermischungen deutlich angehoben werden konnten, ohne dass ein Abfall der Lastwerte bei den übrigen Temperaturbereichen beobachtet wurde.

**Tabelle 2: Ergebnisse der Gelzeit- und Lastwertbestimmung**

| | | **Vergleichsbeispiel 1** | **Vergleichsbeispiel 2** | **Vergleichsbeispiel 3** | **Beispiel 1⁴** | **Beispiel 2⁴** |
|---|---|---|---|---|---|---|
| Bis-(2-hydroxyethyl)-p-toluidin | Gew.-% | 0,80 | | | 0,60 | 0,41 |
| Diethylanilin | Gew.-% | | 0,62 | | | |
| Bis-(2-hydroxypropyl)-m-toluidin | Gew.-% | | | 0,96 | 0,25 | 0,47 |
| Mischungsverhältnis | mol/mol | | | | 3:1 | 1:1 |
| Brenzkatechin | Gew.-% | 0,15 | 0,07 | 0,06 | 0,13 | 0,11 |
| | | | | | | |
| Gelzeit 25°C | min | 06:40 | 06:10 | 06:15 | 06:55 | 06:40 |
| Lastwerte [kN] M12*72 | Ref. ¹ | 58,7 ± 1,1 | 63,4 ± 1,1 | 62,4 ± 2,4 | 62,0 ± 2,3 | 61,0 ± 2,5 |
| | -10°C ² | 58,7 ± 3,9 | ***40,4** ± **2,3*** | ***33,0 ± 4,4*** | 54,1 ± 0,9 | 50,3 ± 1,5 |
| | 40°C ³ | ***45,2 ± 3,1*** | 56,3 ± 2,6 | 60,9 ± 3,2 | 57,8 ± 3,2 | 57,5 ± 1,8 |

| | |
|---|---|
| ¹ | trockenes gereinigtes Bohrloch, Setzen und Aushärten bei Raumtemperatur (+25°C) |
| ² | wie ¹, aber Setzen und Aushärten bei -10°C |
| ³ | wie ¹, aber Setzen und Aushärten bei +40°C |
| ⁴ | nicht zur Erfindung gehörend |

Diese Beispiele belegen die überraschende Tatsache, dass mit den erfindungsgemässen Beschleunigermischungen Gelzeiten eingestellt werden können, die im Bereich der mit den Beschleunigern aus dem Stand der Technik erreichten Gelzeiten liegen. Ferner konnte gezeigt werden, dass die Verwendung der erfindungsgemäßen Beschleunigermischung über den Temperaturbereich von -10°C bis +40°C zu deutlich stabileren Eigenschaften führt. Insbesondere konnte im Tieftemperaturbereich (-10°C) und im Hochtemperaturbereich (+40°C) verbesserten Lastwerten erreicht gegenüber den Vergleichsharzzusammensetzungen werden.

## Patentansprüche

1. Beschleunigermischung für mit Peroxiden härtbare Harzmischungen, umfassend einen Hauptbeschleuniger (I) und einen Co-Beschleuniger (II), **dadurch gekennzeichnet, dass** der Hauptbeschleuniger (I) aus der Gruppe, bestehend aus N,N-Bis-(2-hydroxyethyl)-p-toluidin, N,N-Bis-(2-hydroxypropyl)-p-toluidin oder jeweils ein ethoxyliertes oder propoxyliertes Derivat davon, ausgewählt ist, und der Co-Beschleuniger (II) eine Verbindung der Formel (II) ist 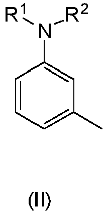 in der R¹ und R² unabhängig voneinander eine C₁- oder C₂-Alkylgruppe, eine C₁-Hydroxyalkylgruppe, oder eine einfach oder mehrfach ethoxylierte oder propoxylierte C₁-C₃-Hydroxyalkylgruppe ist,
und das molare Verhältnis von (I):(II) zwischen 1:1 und 5:1 beträgt.

2. Beschleunigermischung nach Anspruch 1, **dadurch gekennzeichnet, dass** das molare Verhältnis (I):(II) 3:1 beträgt.

3. Harzmischung umfassend mindestens eine radikalisch polymerisierbare Verbindung, einen Beschleuniger für das Härtungsmittel und gegebenenfalls mindestens einen Inhibitor und mindestens einen Reaktivverdünner, **dadurch gekennzeichnet, dass** der Beschleuniger die Beschleunigermischung nach Anspruch 1 oder 2 ist.

4. Harzmischung nach Anspruch 3, **dadurch gekennzeichnet, dass** die Beschleunigermischung in einer Menge von 1 bis 3 Gew.-%, bezogen auf die Harzmischung, enthalten ist.

5. Reaktionsharzmörtel umfassend die Harzmischung nach Anspruch 3 oder 4 und anorganische Zuschlagstoffe.

6. Reaktionsharzmörtel nach Anspruch 5, **dadurch gekennzeichnet, dass** die Harzmischung in einer Menge von 30 bis 50 Gew.-%, bezogen auf den Reaktionsherzmörtel, enthalten ist.

7. Reaktionsharzmörtel nach Anspruch 5 oder 6, **dadurch gekennzeichnet, dass** die weiteren anorganischen Zuschlagstoffe in einer Menge von 50 bis 70 Gew.-%, bezogen auf die Reaktionsharzmörtel, enthalten sind.

8. Zweikomponenten-Mörtelsystem umfassend als A Komponente den Reaktionsharzmörtel nach einem der Ansprüche 5 bis 7 und reaktionsinhibierend getrennt angeordnet als B Komponente einen Härter, der als Härtungsmittel ein organisches Peroxid enthält.

9. Zweikomponenten-Mörtelsystem nach Anspruch 8, **dadurch gekennzeichnet, dass** das organische Peroxid ein Diacylperoxid ist.

10. Zweikomponenten-Mörtelsystem nach Anspruch 8 oder 9, **dadurch gekennzeichnet, dass** die B Komponente ferner ein Phlegmatisierungsmittel enthält.

11. Zweikomponenten-Mörtelsystem nach Anspruch 8 bis 10, **dadurch gekennzeichnet, dass** die B Komponente ferner anorganische Zuschlagstoffe enthält.

12. Zweikomponenten-Mörtelsystem nach einem der Ansprüche 8 bis 11, **dadurch gekennzeichnet, dass** die A Komponente neben dem Reaktionsharzmörtel zusätzlich noch eine hydraulisch abbindende oder polykondensierbare anorganische Verbindung und die B Komponente neben dem Härtungsmittel zusätzlich noch Wasser enthält.

13. Verwendung des Zweikomponenten-Mörtelsystems nach einem der Ansprüche 8 bis 12 zur chemischen Befestigung von Verankerungselementen in Bohrlöchern.

## Claims

1. Accelerator mixture for peroxide-curable resin mixtures, comprising a main accelerator (I) and a co-accelerator (II), **characterized in that** the main accelerator (I) is selected from the group consisting of N,N-bis-(2-hydroxyethyl)-p-toluidine, N,N-bis-(2-hydroxypropyl)-p-toluidine or an ethoxylated or propoxylated derivative thereof, respectively, and the co-accelerator (II) is a compound of formula (II) 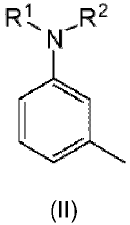 in which R¹ and R² are, independently of one another, a C₁ or C₂ alkyl group, a C₁ hydroxyalkyl group, or a singly or multiply ethoxylated or propoxylated C₁-C₃ hydroxyalkyl group,
and the molar ratio of (l):(ll) is between 1:1 and 5:1.

2. Accelerator mixture according to claim 1, **characterized in that** the molar ratio (I):(II) is 3:1.

3. Resin mixture comprising at least one radically polymerizable compound, an accelerator for the curing agent and optionally at least one inhibitor and at least one reactive diluent, **characterized in that** the accelerator is the accelerator mixture according to claim 1 or 2.

4. Resin mixture according to claim 3, **characterized in that** the accelerator mixture is contained in an amount of from 1 to 3 wt.%, based on the resin mixture.

5. Reaction resin mortar comprising the resin mixture according to claim 3 or 4 and inorganic additives.

6. Reaction resin mortar according to claim 5, **characterized in that** the resin mixture is contained in an amount of from 30 to 50 wt.%, based on the reaction resin mortar.

7. Reaction resin mortar according to claim 5 or 6, **characterized in that** the further inorganic additives are contained in an amount of from 50 to 70 wt.%, based on the reaction resin mortar.

8. Two-component mortar system comprising, as an A component, the reaction resin mortar according to any of claims 5 to 7 and, as a B component, arranged separately so as to inhibit reaction, a curing component which contains an organic peroxide as a curing agent.

9. Two-component mortar system according to claim 8, **characterized in that** the organic peroxide is a diacyl peroxide.

10. Two-component mortar system according to claim 8 or 9, **characterized in that** the B component also contains a phlegmatizer.

11. Two-component mortar system according to claim 8 to 10, **characterized in that** the B component also contains inorganic additives.

12. Two-component mortar system according to any of claims 8 to 11, **characterized in that** the A component also contains a hydraulically setting or polycondensable inorganic compound in addition to the reaction resin mortar and the B component also contains water in addition to the curing agent.

13. Use of the two-component mortar system according to any of claims 8 to 12 for the chemical fastening of anchoring elements in boreholes.

## Revendications

1. Mélange d'accélérateurs pour des mélanges de résines durcissables par des peroxydes, comprenant un accélérateur principal (I) et un co-accélérateur (II), **caractérisé en ce que** l'accélérateur principal (I) est choisi dans le groupe constitué de N,N-bis-(2-hydroxyéthyl)-p-toluidine, N,N-bis(2-hydroxypropyl)-p-toluidine ou respectivement un dérivé éthoxylé ou propoxylé de ceux-ci, et le co-accélérateur (II) est un composé de formule (II) 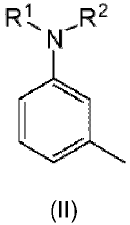 où R¹ et R² représentent, indépendamment l'un de l'autre, un groupe alkyle en C₁ ou en C₂, un groupe hydroxyalkyle en C₁ ou un groupe hydroxyalkyle en C₁-C₃ éthoxylé ou propoxylé une ou plusieurs fois,
et le rapport molaire (I):(II) est compris entre 1:1 et 5:1.

2. Mélange d'accélérateurs selon la revendication 1, **caractérisé en ce que** le rapport molaire (I):(II) est de 3:1.

3. Mélange d'accélérateurs comprenant au moins un composé polymérisable par voie radicalaire, un accélérateur destiné à l'agent durcissant et éventuellement au moins un inhibiteur et au moins un diluant réactif, **caractérisé en ce que** l'accélérateur est le mélange d'accélérateurs selon la revendication 1 ou 2.

4. Mélange d'accélérateurs selon la revendication 3, **caractérisé en ce que** le mélange d'accélérateurs est contenu en une quantité allant de 1 à 3 % en poids par rapport au mélange de résine.

5. Mortier de résine de réaction comprenant le mélange de résine selon la revendication 3 ou 4 et des additifs inorganiques.

6. Mortier de résine de réaction selon la revendication 5, **caractérisé en ce que** le mélange de résine est contenu en une quantité allant de 30 à 50 % en poids par rapport au mortier de résine de réaction.

7. Mortier de résine de réaction selon la revendication 5 ou 6, **caractérisé en ce que** les autres additifs inorganiques sont contenus en une quantité allant de 50 à 70 % en poids par rapport au mortier de résine de réaction.

8. Système de mortier à deux composants comprenant, comme composant A, le mortier de résine de réaction selon l'une des revendications 5 à 7 et, disposé séparément comme composant B de manière à inhiber la réaction, un durcisseur qui contient un peroxyde organique comme agent durcissant.

9. Système de mortier à deux composants selon la revendication 8, **caractérisé en ce que** le peroxyde organique est un peroxyde de diacyle.

10. Système de mortier à deux composants selon la revendication 8 ou 9, **caractérisé en ce que** le composant B contient en outre un agent flegmatisant.

11. Système de mortier à deux composants selon les revendications 8 à 10, **caractérisé en ce que** le composant B contient en outre des additifs inorganiques.

12. Système de mortier à deux composants selon l'une des revendications 8 à 11, **caractérisé en ce que** le composant A contient, en plus du mortier de résine de réaction, également un composé inorganique à prise hydraulique ou polycondensable et le composant B, en plus de l'agent durcissant, contient également de l'eau.

13. Utilisation du système de mortier à deux composants selon l'une des revendications 8 à 12 pour la fixation chimique d'éléments d'ancrage dans des trous de forage.
